# EUROPEAN PATENT SPECIFICATION

(11) **EP 2 125 939 B1**
(45) Date of publication and mention of the grant of the patent: **21.09.2011**
(21) Application number: 08731898.6
(22) Date of filing: 11.03.2008
(51) Int. Cl.: C08J 3/24, C08K 5/00, C08K 5/101, C08K 5/29

(54) **SOCYANATE AND DIISOCYANATE COMPOUNDS FOR MINIMIZING SCORCH AND DIISOCYANATE COMPOUNDS FOR PROMOTING CURE IN CROSSLINKABLE COMPOSITIONS**
ISOCYANAT- UND DIISOCYANATVERBINDUNGEN ZUR ANVERNETZUNGSMINIMIERUNG SOWIE DIISOCYANATVERBINDUNGEN ZUR HÄRTUNGSFÖRDERUNG BEI VERNETZBAREN ZUSAMMENSETZUNGEN
COMPOSÉS ISOCYANATES ET DIISOCYANATES POUR MINIMISER LE GRIFFAGE ET COMPOSÉS DIISOCYANATE POUR FAVORISER LE DURCISSEMENT DES COMPOSITIONS RÉTICULABLES

(30) Priority: 15.03.2007 US 894973 P
(43) Date of publication of application: 02.12.2009
(73) Proprietor: Dow Global Technologies LLC, Midland, MI 48674 (US)
(72) Inventor: CHAUDHARY, Bharat, I., Princeton, NJ 08540 (US); EATON, Robert, F., Belle Mead, NJ 08502 (US)
(74) Representative: Hayes, Adrian Chetwynd
(86) International application number: PCT/US2008/056517
(87) International publication number: WO 2008/112690

(56) References cited:
- EP-A- 0 504 920
- GB-A- 2 168 069
- JP-A- 6 306 210
- US-A- 3 711 454
- US-A- 3 954 907

## Description

### FIELD OF THE INVENTION

This invention relates to crosslinkable compositions. In one aspect, the invention relates to crosslinkable compositions in which crosslinking is initiated by a free radical initiator while in other aspects, the invention relates to the inhibition of premature crosslinking and/or cure boosting of such crosslinkable compositions. In still another aspect, the invention relates to the use of an isocyanate, diisocyanate and/or (meth)acrylate compound to inhibit premature crosslinking in a free radical crosslinkable composition while in yet another aspect, the invention relates to the use of a diisocyanate compound to boost the ultimate degree of crosslinking in a free radical crosslinkable composition.

### BACKGROUND OF THE INVENTION

One difficulty in using thermally activated free radical initiators, e.g., organic peroxides and azo compounds, in crosslinking, i.e., curing, elastomeric and thermoplastic materials is that they may initiate premature crosslinking, i.e., scorch, during compounding and/or processing prior to the actual phase in the overall process in which curing is desired. With conventional methods of compounding, such as milling, Banbury, or extrusion, scorch occurs when the time-temperature relationship results in a condition in which the free radical initiator undergoes thermal decomposition which, in turn, initiates a crosslinking reaction that can create gel particles in the mass of the compounded polymer. These gel particles can adversely impact the homogeneity of the final product. Moreover, excessive scorch can so reduce the plastic properties of the material that it cannot be efficiently processed with the likely possibility that the entire batch will be lost.

One widely accepted method for minimizing scorch is to choose a free radical initiator that has a sufficiently high activation temperature so that compounding and/or other processing steps can be successfully completed prior to the final curing step. Typical of this class of initiators are those with a high 10-hour half-life temperature. The disadvantages of this method are longer cure times, and thus lower throughput. Higher cure temperatures can be used to offset the longer cure times, but then higher energy costs are incurred. Higher cure temperatures can also adversely affect the thermal stability of the materials.

Another method of minimizing scorch is to lower the compounding and/or processing temperature to improve the scorch safety margin of the crosslinking agent. This method, however, may have limited scope depending upon the polymer and/or process involved. In addition, here too curing at a lower temperature requires a longer cure time and results in lower throughput. Lower temperatures can also increase the viscosity of the material which in turn can make mixing more difficult, and can increase the risk of running up against the freezing point of the polymer.

Yet another method of minimizing scorch is the incorporation of scorch inhibitors into the compositions. For example, British patent 1,535,039 discloses scorch-resistant compositions comprising organic hydroperoxides and ethylene polymers. USP 3,751,378 discloses the use of N-nitroso diphenylamine or N,N'-dinitroso-para-phenylamine as scorch retardants incorporated into a polyfunctional acrylate crosslinking monomer for providing long Mooney scorch times in various elastomer formulations. USP 3,202,648 discloses the use of nitrites such as isoamyl nitrite, tert-decyl nitrite and others as scorch inhibitors for polyethylene. USP 3,954,907 discloses the use of monomeric vinyl compounds as protection against scorch. USP 3,335,124 describes the use of aromatic amines, phenolic compounds, mercaptothiazole compounds, bis(N,N-disubstituted-thiocarbamoyl) sulfides, hydroquinones and dialkyldithiocarbamate compounds. USP 4,632,950 discloses the use of mixtures of two metal salts of disubstituted dithiocarbamic acid in which one metal salt is based on copper.

Other scorch inhibitor used in free radical, particularly peroxide, initiator-containing compositions, include 2,2,6,6-tetramethylpiperidin-1-oxyl (TEMPO) and its derivatives, such as 4-hydorxy-2,2,6,6-tetramethylpiperidin-1-oxyl also known as 4-hydroxy-TEMPO or even more simply, h-TEMPO. A good description of scorch inhibition by TEMPO derivatives in comparison with hindered phenols is available in Chaudhary, B. I., Chopin, L. J. and Klier, J., Polymer Engineering and Science, Vol. 47, 50-61 (2007). The addition of 4-hydroxy-TEMPO minimizes scorch by "quenching" free radical crosslinking of the crosslinkable polymer at melt processing temperatures.

Once beyond that part of the process in which scorch is a concern, rapid and complete crosslinking is usually desirable. To this end, crosslinkable compositions often incorporate cure boosters, i.e., compounds that promote the rate and completeness of the cure of the crosslinkable polymer after the polymer has been shaped or molded to its desired final configuration. Many cure (crosslinking) boosters are known, and those taught in USP 6,636,986 and 6,187,847 are exemplary. Cure boosters that show little, if any, activity during that part of the process in which scorch is a concern are of continuing interest to the polymer molding and shaping industry.

### SUMMARY OF THE INTENTION

In one embodiment, a thermally activated, free-radical initiator-containing polymer composition of this invention comprises a (i) free radical initiator, (ii) free radical, crosslinkable polymer, and (iii) scorch inhibiting amount of at least one of an isocyanate and a diisocyanate scorch inhibitor. In another embodiment, a thermally activated polymer composition comprises a (i) free radical initiator, (ii) free radical crosslinkable polymer, and (iii) cure boosting amount of at least one diisocyanate cure booster. Optionally, the composition can contain other additives such as antioxidants, pigments, flame retardants, other cure boosters (e.g., bis-TEMPO, α-methyl styrene dimer, etc.), and other scorch inhibitors (e.g., hindered phenols, various TEMPO compounds and the like). The free radical initiator can be any thermally activated compound that is relatively unstable and easily breaks into at least two radicals, e.g., a peroxide or azo initiator. The crosslinkable polymer is a thermoplastic and/or elastomeric polymer that can be crosslinked (cured) through the action of a free radical crosslinking agent. The scorch inhibitors and cure boosters of this invention are used in the same manner as known scorch inhibitory and cure boosters, and in varying amounts to achieve a comparable level of scorch protection and/or cure boost.

"Scorch inhibiting amount" and like terms means an amount of scorch inhibitor that will reduce the amount of scorch in a free radical crosslinkable polymer composition relative to the amount of scorch that the polymer composition would experience in the absence of the scorch inhibitor all else, e.g., reagents, concentrations, process conditions, etc., being the same. "Cure boosting amount" and like terms means an amount of cure booster that will increase the amount and/or rate of crosslinking in a free radical crosslinkable polymer composition relative to the amount and/or rate of crosslinking that the polymer composition would experience in the absence of the cure booster all else, e.g., reagents, concentrations, process conditions, etc., being the same.

In one embodiment, the use of an isocyanate or a diisocyanate, compound provides a desirable balance of scorch protection at melt processing temperatures and cure control at vulcanization temperatures. In another embodiment, this balance of scorch protection and cure control is achieved with a combination of an (meth)acrylate compound and a diisocyanate compound.

### BRIEF DESCRIPTION OF THE DRAWINGS

Figure 1 is a graph reporting the effect of hydroxyethyl acrylate (HEA) and hydroxyethyl methacrylate (HEMA) and combinations of HEA and HEMA with methylene di-p-phenyl diisocyanate, (MDI) on the crosslinking kinetics of low density polyethylene (LDPE) with 1 weight percent (wt%) dicumyl peroxide (DCP) at 140C.
Figure 2 is a graph reporting the effect of HEA and HEMA and combinations of HEA and HEMA with MDI on the crosslinking of LDPE with 1 wt% DCP at 182C.
Figure 3 is a graph reporting the effect of HEA and HEMA and combinations of HEA and HEMA with MDI on the crosslinking of LDPE with 1 wt% DCP at 200C.
Figure 4 is a graph reporting the effect of HEA, HEMA and combinations of HEA and HEMA with MDI on the balance of scorch characteristics (ts1 at 140C) and degree of crosslinking (MH-ML at 182C) of LDPE with 1 wt% DCP.
Figure 5 is a graph reporting the effect of HEA, HEMA and combinations of HEA and HEMA with MDI on the balance of scorch characteristics (ts1 at 140C) and degree of crosslinking (MH-ML at 200C) of LDPE with 1 wt% DCP.
Figure 6 is a graph reporting the effect of PAPI-TEMPO addict on the scorch characteristics of LDPE with 1.7 wt% DCP at 140C.
Figure 7 is a graph reporting the effect of PAPI-TEMPO adduct on the crosslinking of LDPE with 1.7 wit% DCP at 182C.
Figure 8 is a graph reporting the effect of 4-hydroxy-TEMPO and MDI urethane bis-TEMPO on the scorch characteristics of LDPE with 1.7 wt% DCP at 140C,
Figure 9 is a graph reporting the effect of 4-hydroxy-TEMPO and MDI urethane bis-TEMPO on the crosslinking of LDPE with 1.7 wt% DCP at 182C.
Figure 10 is a graph reporting the effect of 4-hydroxy-TEMPO and 4-hydroxy-TEMPO in combination with MDI on the balance of scorch characteristics (tsl at 140C) and degree the of crosslinking (MH-ML at 182C) of LDPE with 1.7 wt% DCP.
Figure 11 is a graph reporting the effect of 4-hydroxy-TEMPO and 4-hydroxy-TEMPO in combination with MDI on the balance of scorch characteristics (ts1 at 140C) and degree the of crosslinking (MH-ML at 182C) of LDPE with 1.7 wt% DCP.
Figure 12 is a graph reporting the effect of various TEMPO compounds and combinations of various TEMPO in combination with MDI on the balance of scorch characteristics (ts1 at 140C) and degree the of crosslinking (MH-ML at 182C) of LDPE with 1.7 wt% DCP.
Figure 13 is a graph reporting the effect of MDI on the scorch characteristics of LDPE with 1.7 wt% DCP at 140C.
Figure 14 is a graph reporting the effect of MDI on the crosslinking kinetics of LDPE with 1.7 wt% DCP at 182C.
Figure 15 is a graph reporting the effect of MDI on the balance of scorch characteristics (ts1 at 140C) and degree of crosslinking (MH-ML at 182C) of LDPE with 1.7 wt% DCP.

### DESCRIPTION OF THE PREFERRED EMBODIMENTS

"Isocyanate", "diisocyanate" and similar terms mean compounds represented by formula (I):

R(NCO)n (I)

wherein n is at least 1 and preferably between about 2 and 4, and R is an aliphatic, alicyclic, aliphatic-alicyclic, aromatic, or aliphatic-aromatic hydrocarbon or an inertly-substituted hydrocarbon radical of 4 to 26 carbon atoms, but more conventionally from 6 to 20 and generally from about 6 to 13 carbon atoms. "Inertly-substituted" and like terms mean that the compound, radical or other group can bear one or more substituents that are essentially nonreactive with the reagents and products of the crosslinking process.

Representative examples of isocyanates and diisocyanates include stearyl isocyanate, hexadecyl isocyanate, phenyl isocyanate, naphthyl isocyanate, tetramethylene diisocyanate; hexamethylene diisocyanate; trimethylhexamethylene diisocyanate; dimer acid diisocyanate; isophorone diisocyanate; diethylbenzene diisocyanate; decamethylene 1,10-diisocyanate; cyclohexylene 1,2-diisocyanate and cylohexylene-1,4-diisocyanate, 2,4- and 2,6-tolylene diisocyanate; 4,4-diphenylmethane diisocyanate; 1,4-naphthalene diisocyanate; dianisidine diisocyanate; toluidine diisocyanate; m-xylylene diisocyanate; tetrahydronaphthalene-1,5-diisocyanate; and bis(4-isocyanatophenyl)methane.

Polymeric isocyanates having a functionality of greater than 2, such as neopentyl tetraisocyanate, can also be used. In addition, mixtures of di- and tri-functional isocyanates are commercially available and may be used to obtain an isocyanate component having a functionality of between 2 and 3 (e.g., PAPI 901 available from The Dow Chemical Company), while mixtures of tri- and tetra-functional isocyanates may be used to obtain functionalities of between 3 and 4 (e.g., DESMODUR N 3300 available from Miles, Perkasie, Pa.). The following table identifies a number of diisocyanate compounds, their functionality and supplier that can be used in the practice of this invention. 4,4-Diphenylmethane diisocyanate (aka methylene di-p-phenyl diisocyanate (MDI)) is a preferred diisocyanate for use in the practice of this invention.

**SUITABLE ISOCYANATES**

| **Component** | **Functionality** | **Supplier** |
|---|---|---|
| PAPI 94 | 2.2 | DOW |
| PAPI 2580 | 3 | DOW |
| ISONATE 2181 | 2 | DOW |
| ISONATE 2125M | 2 | DOW |
| MONDUR MR | 2.7 | MOBAY |
| MONDUR CD | 2 | MOBAY |
| MONDUR CB75 | 3 | MOBAY |
| DSMODUR W | 2 | MOBAY |
| TMXDI | 2 | CYANAMID |
| CYTHANE 3160 | 3 | CYANAMID |
| TDI 80 | 2 | OLIN |
| DMI1410 | 2 | HENKEL |

"Acrylate" means a salt or ester of acrylic acid, "methacrylate" means a salt or ester of methacrylic acid, and "(meth)acrylate" means a salt or ester of either acrylic acid or methacrylic acid. These monomers are represented by formula II:

H₂C=C(R₁)-C(O)-O-R₂ (II)

in which R₁ is a hydrogen or methyl radical, and R₂ is a straight or branched chain hydrocarbon radical, or a hydroxyalkyl (-R₂-OH) radical, or an inertly-substituted hydrocarbon or hydroxyalkyl radical having 1 to 10 carbon atoms. If R₂ is not a hydroxyalkyl or inertly-substituted hydroxyalkyl radical, then preferably R₂ is a methyl, ethyl, or propyl radical. If R₂ is a hydroxyalkyl or inertly-substituted hydroxyalkyl radical, then R₂ is preferably an ethyl hydroxyl radical (-CH₂-CH₂-OH). The preferred hydroxyalkyl acrylate is hydroxyethyl acrylate (HEA). The preferred hydroxyalkyl methacrylate is hydroxyethyl methacrylate (HEMA). "Inertly-substituted" and like terms means that the radical group can bear one or more substituents that are essentially nonreactive with the reagents and products of the crosslinking process.

"TEMPO compound" and like terms mean compounds represented by formulae (III), (IV) and (V). 4-Hydroxy-TEMPO has the chemical structural formula of (III): 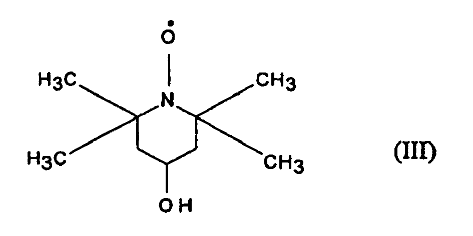 The TEMPO compounds from which a derivative, particularly the ether, ester and urethane derivates, can be prepared are of formula (IV): 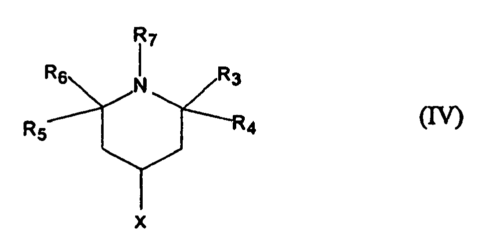 The ether, ester and urethane derivatives of a TEMPO compound that are used as scorch inhibitors in the compositions of this invention have the chemical structural formula of (V): 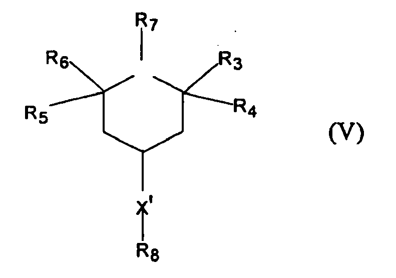 in which
X of formula IV is any group that can react with another compound, e.g., an alcohol, a carboxylic acid, an alkyl sulfate, an isocyanate, etc., to form the ether, ester or urethane group (or corresponding sulfur, phosphorus or amine derivative) of formula V, and preferably X is hydroxyl, amine, mercaptan, phosphino (H₂P-), phosphinyl (H₂P(O)-) or silyl (H₃Si-) group, and more preferably X is hydroxyl;
X' of formula V is at least a divalent atom, preferably an atom of oxygen, sulfur, nitrogen, phosphorus or silicon, more preferably an atom of oxygen or sulfur and most preferably an atom of oxygen;
and with respect to both formulae IV and V
R₃-R₆ are each independently a C₁₋₁₂ hydrocarbyl or inertly-substituted hydrocarbyl group, or any of the R₃-R₆ groups can join with one or more of the other R₃-R₆ groups to form one or more hydrocarbyl or inertly-substituted hydrocarbyl rings, preferably with at least a 5 carbon atoms;
R₇ is an oxyl (O•) or a C₁₋₂₀ hydrocarbyloxy group;
R₈ is a hydrogen or C₁₋₁₂ hydrocarbyl or inertly-substituted hydrocarbyl or carboxyl group, or a urethane group of the formula 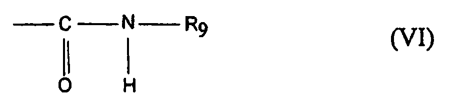 with the proviso that if the R₃-R₆ groups are methyl, then R₈ is not hydrogen; and
R₉ is a C₂₋₃₀ hydrocarbyl or inertly-substituted hydrocarbyl group.
As here used, "ether, ester and urethane derivatives" are the compounds of formula V in which X' is a divalent oxygen radical. The hydrocarbyl groups of R₃-R₉ include, but are not limited to, alkyl, aryl, aralkyl, cycloalkyl, alkenyl, and the like. Preferably, R₃-R₆ are each independently a C₁₋₄ alkyl group and more preferably, R₃-R₆ are each independently methyl groups. Preferably R₇ is an oxyl or a C₁₋₁₂ alkyloxy group, and more preferably an oxyl group. Preferably R₈ is a C₁₋₁₂ alkyl, or a C₁₋₁₂ alkyl carboxyl or an aryl carboxyl group, or a urethane group, and more preferably a C₁₋₈ alkyl group, or benzoic acid group, or a urethane group. Preferably R₉ is a C₅₋₃₀ alkyl group, more preferably a C₅₋₂₀ alkyl group. Representative ether and urethane derivatives of 4-hydroxy-TEMPO include methyl ether TEMPO, butyl ether TEMPO, hexyl ether TEMPO, allyl ether TEMPO, amino-TEMPO, PAPI-TEMPO adduct, MDI-urethane-bis-TEMPO and stearyl urethane TEMPO.

The scorch inhibitors of this invention are used in the same manner as known scorch inhibitors. The amount of scorch inhibitor used in the compositions of this invention will vary with its molecular weight and the amount and nature of the other components of the composition, particularly the free radical initiator, but typically the minimum amount of scorch inhibitor used is at least about 0.01, preferably at least about 0.05, more preferably at least about 0.1 and most preferably at least about 0.15, wt% based on the weight of the polymer. These minimums are particularly useful for in a system comprising LDPE and 1.7 weight percent (wt%) peroxide. The maximum amount of scorch inhibitor can vary widely, and it is more a function of cost and efficiency than anything else. The typical maximum amount of scorch inhibitor does not exceed about 20, preferably does not exceed about 10 and more preferably does not exceed about 7, wt% based on the weight of the polymer. Here too, these maximums are particularly useful for a system comprising LDPE and 1.7 wt% peroxide.

In certain embodiments of this invention, combinations of two or more scorch inhibitors or cure boosters are preferred. One such combination is a diisocyanate compound with a TEMPO compound, e.g., MDI and 4-hydroxy-TEMPO. In comparison with the use of a TEMPO compound alone, this combination often improves the balance of "scorch protection" at melt processing/extrusion temperatures and "cure control" at vulcanization temperatures. In the case of 4-hydroxy-TEMPO and without being held to theory, one end of the diisocyanate is believed to first react with 4-hydroxy-TEMPO that is grafted onto a polymer chain, and eventually the pendant isocyanate group reacts with another 4-hydroxy-TEMPO grafted onto a different polymer chain to form a crosslinked network. The fact that the diisocyanate is not first reacted with 4-hydroxy-TEMPO (to form a urethane bis-TEMPO) mitigates the propensity for scorch obtained with urethane bis-TEMPO. Similar results are obtained with amino TEMPO and, rather surprisingly, with stearyl urethane TEMPO (the latter is not believed to be reactive with MDI). The typical molar ratio of diisocyanate to TEMPO ranges from 0.1 to 20, preferably 0.3 to 17, more preferably 0.5 to 15, and most preferably 0.7 to 20.

Another such combination is hydroxyalkyl (meth)acrylate with diisocyanate, particularly HEA and/or HEMA with MDI. These combinations improve, i.e., boost, the cure at vulcanization conditions with about the same or increased "scorch protection" in the melt processing step, in comparison with HEA or HEMA alone. The combination of HEMA and MDI is particularly outstanding in that both scorch protection at 140C and cure at 182°C are superior to that obtained with peroxide alone. The typical molar ratio of hydroxyl (meth)acrylate to diisocyanate ranges from 0.1 to 20, preferably 0.3 to 17, more preferably 0.5 to 15 and most preferably 0.7 to 12.

The cure boosters of this invention are used in the same manner as known cure boosters. The amount of cure booster used in the compositions of this invention will vary with its molecular weight and the amount and nature of the other components of the composition, particularly the free radical initiator, but typically the minimum amount of cure booster used is at least about 0.01, preferably at least about 0.05, more preferably at least about 0.1 and most preferably at least about 0.15, wt% based on the weight of the polymer. These minimums are particularly useful for in a system comprising LDPE and 1.7 weight percent (wt%) peroxide. The maximum amount of cure booster can vary widely, and it is more a function of cost and efficiency than anything else. The typical maximum amount of cure booster does not exceed about 20, preferably does not exceed about 10 and more preferably does not exceed about 7, wt% based on the weight of the polymer. Here too, these maximums are particularly useful for a system comprising LDPE and 1.7 wt% peroxide.

The scorch inhibitor and/or cure booster of this invention is admixed with the crosslinkable elastomeric and/or thermoplastic polymeric systems by employing conventional compounding means including, but not limited to, spraying, soaking and melt compounding. The scorch inhibitor and/or cure booster can be blended into the composition directly or formulated with one or more other components of the composition before addition to the other components of the composition. In one preferred embodiment, the scorch inhibitor and/or cure booster is formulated with the crosslinkable polymer to form a masterbatch, and then the masterbatch is melt blended with the remainder of the polymer to form a homogeneous composition.

Free radical crosslinking processes for crosslinkable polymers are well known in the art, and are well described generally in PCT applications WO 2005/063896, WO 2005/066280 and WO 2005/066282. The thermoplastic and/or elastomeric polymers encompassed in the present invention are those natural or synthetic polymers which are thermoplastic and/or elastomeric in nature, and which can be crosslinked (cured) through the action of a crosslinking agent. Rubber World, "Elastomer Crosslinking with Diperoxyketals," October, 1983, pp.26-32, Rubber and Plastic News, "Organic Peroxides for Rubber Crosslinking," Sep. 29, 1980, pp. 46-50, and the PCT publications cited above all describe the crosslinking action and representative crosslinkable polymers. Polyolefins suitable for use in this invention are also described in the above PCT applications and in Modem Plastics Encyclopedia 89 pp 63-67, 74-75. Illustrative polymers include LLDPE, LDPE, HDPB, medium density polyethylene, ultralow density polyethylene, chlorinated polyethylene, ethylene-propylene terpolymers (e.g., ethylene-propylene-butadiene), polybutadiene, styrene-acrylonitrile (SAN), acrylonitrile-butadiene-styrene (ABS), ethylene vinyl acetate (EVA), ethylene-propylene copolymers (EP), silicone rubber, chlorosulfonated polyethylene, fluoroelastomers and the like.

In addition, blends of two or more polymers may be employed. The polymers described above and the crosslinkable compositions prepared from these polymers may contain various other additives known to those skilled in the art including, but not limited to, fillers such as carbon black, titanium dioxide, and the alkaline earth metal carbonates, and monomeric co-agents such as triallylcyanurate, allyldiglycolcarbonate, triallylisocyanurate, trimethylolpropane, diallylether, trimethylolpropane trimethacrylate, and various allylic compounds. The crosslinkable compositions of this invention may also contain such conventional additives as antioxidants, stabilizers, plasticizers, processing oils and the like.

The free radical initiators used in the practice of this invention include any thermally activated compound that is relatively unstable and easily breaks into at least two radicals. Representative of this class of compounds are the peroxides, particularly the organic peroxides, and the azo initiators. Of the free radical initiators used as crosslinking agents, the dialkyl peroxides and diperoxyketal initiators are preferred. These compounds are described in the Encyclopedia of Chemical Technology, 3rd edition, Vol. 17, pp 27-90. (1982).

In the group of dialkyl peroxides, the preferred initiators are: dicumyl peroxide, di-t-butyl peroxide, t-butyl cumyl peroxide, 2,5-dimethyl-2,5-di(t-butylperoxy)-hexane, 2,5-dimethyl-2,5-di(t-amylperoxy)-hexane, 2,5-dimethyl-2,5-di(t-butylperoxy)hexyne-3, 2,5-dimethyl-2,5-di(t-amylperoxy)hexyne-3, α,α-di[(t-butylperoxy)-isopropyl]-benzene, di-t-amyl peroxide, 1,3,5-tri-[(t-butylperoxy)-isopropyl]benzene, 1,3-dimethyl-3-(t-butylperoxy)butanol, 1,3-dimethyl-3-(t-amylperoxy)butanol and mixtures of two or more of these initiators.

In the group of diperoxyketal initiators, the preferred initiators are: 1,1-di(t-butylperoxy)-3,3,5-trimethylcyclohexane, 1,1-di(t-butylperoxy)cyclohexane n-butyl, 4,4-di(t-amylperoxy)valerate, ethyl 3,3-di(t-butylperoxy)butyrate, 2,2-di(t-amylperoxy)propane, 3,6,6,9,9-pentamethyl-3-ethoxycarbonylmethyl-1,2,4,5-tetraoxacyclononane, n-butyl-4,4-bis(t-butylperoxy)-valerate, ethyl-3,3-di(t-amylperoxy)-butyrate and mixtures of two or more of these initiators.

Other peroxide initiators, e.g., 00-t-butyl-0-hydrogen-monoperoxysuccinate; 00-t-amyl-0-hydrogen-monoperoxysuccinate and/or azo initiators e.g., 2,2'-azobis-(2-acetoxypropane), may also be used to provide a crosslinked polymer matrix. Other suitable azo compounds include those described in USP 3,862,107 and 4,129,531. Mixtures of two or more free radical initiators may also be used together as the initiator within the scope of this invention. In addition, free radicals can form from shear energy, heat or radiation.

The amount of crosslinking agent present in the crosslinkable compositions of this invention can vary widely, but the minimum amount is that sufficient to afford the desired range of crosslinking. The minimum amount of initiator is typically at least about 0.02, preferably at least about 0.05 and more preferably at least about 0.1, wt% based upon the weight of the polymer or polymers to be crosslinked. The maximum amount of initiator used in these compositions can vary widely, and it is typically determined by such factors as cost, efficiency and degree of desired crosslinking desired. The maximum amount is typically less than about 20, preferably less than about 15 and more preferably less than about 10, wt% based upon the weight of the polymer or polymers to be crosslinked.

For some applications, the use of liquid or neat free radical initiator is desirable or even required. One such application is in extrusion compounding. One common commercial process technique employs liquid initiator which is sprayed onto polymer pellets or granules to coat them prior to extrusion compounding. This can provide increased production efficiency and eliminates physical handling of hazardous compounds.

The crosslinkable composition may be heat cured to a time sufficient to obtain the desired degree of crosslinking. The heat curing has a temperature-time relationship which is primarily dependent on the polymeric compound and the peroxide initiator present, but that relationship may be affected by other ingredients in the formulation. The customary cure time is typically about 3 to 8 half-lives of the initiator, but this may be varied based on experience at the option of the operator and the exact properties desired in the final product.

The crosslinking (curing) temperature is typically between about 100C and about 300C or more. The cure time is inversely related to the temperature. Compositions employing the preferred initiators heat cure at a temperature-time relation of about 120C to about 200C and about 0.5 to about 30 minutes. The heat cure may be carried out in any conventional fashion such as mold cures, oil bath cures (where oil does not harm the polymeric compound), oven cures, steam cures, and hot metal salt bath cures.

The compositions of this invention are further described by the following examples, and the data relates to the performance of the various nitroxides on cure control, migration and solubility. Unless otherwise noted, all parts and percentages are by weight.

### SPECIFIC EMBODIMENTS

### Examples 1-4 and Comparable Example 1: HEA, HEMA and MDI

### Materials

The crosslinkable polymer resin is LDPE in pellet form with a melt index (I₂, 2.16 kg, 190C) of 2.4 dg/min and a density of 0.92 g/cc. The scorch inhibitors and/or cure boosters are hydroxyethyl acrylate, hydroxyethyl methacrylate and methylene p-diphenyl diisocyanate (MDI). The peroxide is DiCup R which is dicumyl peroxide available from Geo Specialty Chemicals.

### Sample Preparation

The LDPE polymer pellets are heated in a glass jar at 60C for 2 hours. The peroxide (melting point of 40C) is melted separately also at 60C using a water bath. The melted peroxide is then added to the pellets using a syringe, and the pellets and peroxide are tumble blended for 30 minutes at room temperature. The jar containing the peroxide-soaked polymer pellets is then placed in an oven at 60C overnight. The pellets are then tumble blended again within the jar for another 30 minutes.

The peroxide-soaked pellets are used to make about 40 grams of the various compositions in a melt-compounding step using a Brabender mixing bowl. The bowl is not purged with nitrogen. The pellets are loaded into the bowl, mixed at 30 rpm and 125C until molten by fluxing for 3 minutes at 125C. The scorch inhibitor and/or cure booster is then added and further mixed for additional 7 minutes at the same set temperature and speed conditions. The mixture is then removed and pressed into a sheet before cooling down.

### Testing for Cure Performance:

About 6 gram samples are cut from the sheets prepared in the previous step, and then placed into the chamber of a moving die rheometer (MDR) for cure, i.e., crosslinking, performance analysis. The instrument used is an MDR 2000 from Alpha Technologies set at 100 cycles per minute and an arc of 05 degrees. Crosslinking kinetics is studied at various set temperatures.

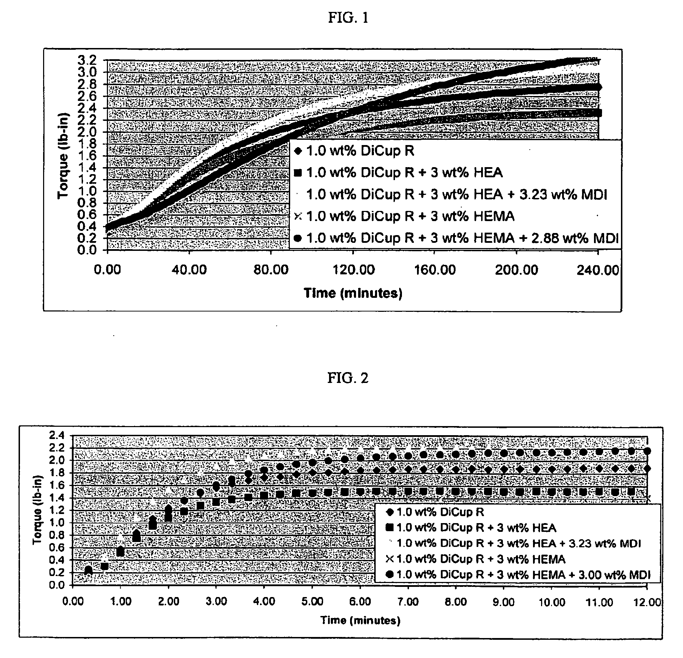

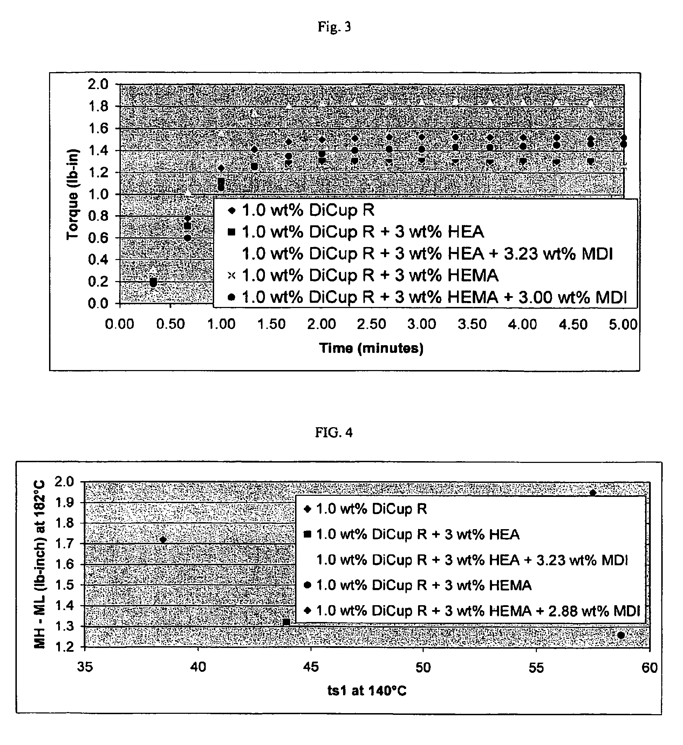

To simulate melt processing conditions at which scorch is not desirable, the MDR is run at 140C for 240 minutes and ts₁ (the time in minutes for the torque to move above the minimum or baseline torque value by 1 in-lb) is obtained. To simulate vulcanization conditions at which rapid and effective crosslinking is desirable, the apparatus is run at 182 or 200C for 12 minutes and 5 minutes, respectively, and the difference between maximum torque response (MH) and the minimum torque (ML) is obtained. The results are reported in Figures 1-5. In all examples, the LDPE composition comprises 1 wt% peroxide, 3 wt% of either HEA or HEMA, and 3.23 wt% MDI if in combination with HEA or 2.88 wt% of MDI if in combination with HEMA.

As seen from Figures 1-5, both HEA and HEMA, particularly the latter, are effective scorch retardants for peroxide crosslinking of LDPE at the concentration used. Moreover, the combination of HEMA and MDI results in both desirably increased scorch time (time for 1 in-lb increase in torque, tsₗ) at a temperature of 140C and no appreciable loss in degree of crosslinking (maximum torque, MH - ML) at 182C and 200C. The combination of HEA and MDI results in decreased scorch time (time for 1 in-lb increase in torque, ts₁) at a temperature of 140C, but desirably increased degree of crosslinking (maximum torque, MH - ML) at 182C and 200C.

### Examples 5-10 and Comparative Examples 2-17: MDI

### Materials

The crosslinkable polymer resin is LDPE in pellet form with a melt index (I₂, 2.16 kg, 190C) of 2.4 dg/min and a density of 0.92 g/cc. The scorch inhibitors and/or cure boosters of the invention are methylene p-diphenyl diisocyanate (MDI). The scorch inhibitors and/or cure boosters of the comparative examples are 4-hydroxy-TEMPO, PAPI-TEMPO adduct, MDI urethane bis-TEMPO adduct, stearyl urethane TEMPO and amino TEMPO (4-amino-2,2,6,6-tetramethylpiperidino-oxy). The peroxide is DiCup R which is dicumyl peroxide available from Geo Specialty Chemicals.

### Preparation of PAPI-TEMPO Adduct

Into a 250 milliliter (mL) round bottom flask, PAPI 901 (5 mL, 46.2 millimoles (mmol)) is dissolved in tetrahydrofuran (THF) (50 mL). PAPI 901 is a polymeric MDI (polymethylene polyphenylisocyanate that contains MDI, 2.3 functionality, and is available from The Dow Chemical Company). To the stirred solution is added 4-hydroxy-TEMPO (9.95 g, 57.8 mmol, 1.25 equiv) and triethylamine (0.65 mL, 0.1 equiv) to produce a red-orange solution. The flask is fitted with an Allihn condenser equipped with a nitrogen inlet. The reflux apparatus is purged with nitrogen for one hour to remove residual air, and is then heated to a gentle reflux. After three hours, a small aliquot is removed and evaporated into a thin film on a sodium chloride plate. Analysis shows the continued presence of isocyanate bands (2266 cm-l), and the reaction is continued overnight. After twenty hours, another aliquot is removed and analyzed. No isocyanate bands remain so the reaction mixture is allowed to cool to room temperature.

The volatile materials are then removed under reduced pressure leaving a viscous brown liquid. The liquid is washed successively with ether (5 x 20 mL) to remove the unreacted 4-hydroxy-TEMPO. The washings are discontinued once the ethereal extract remains pale yellow in color. The remaining brown semi-solid material is then titrated with hexane, and the hexane layer decanted. Two successive hexane washings ultimately produce a granular solid as residual ether is removed. The tan solid is then suspended in 100 mL of hexane and stirred for six hours. Filtration and drying under vacuum produces a pale tan solid (10.5 g) representing a 75% yield, and a thin film of the same providing an infrared spectrograph of 3311 (N-H), 2988 (C-H), 1722 (C=O), 1533 cm-1.

### Preparation of MDI Urethane bis-TEMPO Adduct

Into a 250 mL round bottom flask is placed MDI (10 g, 40.0 mmol) and a stir bar. The solid is dissolved in toluene (30 mL), and the flask is fitted with a pressure equalizing addition funnel. After the apparatus is purged with nitrogen, a solution of 4-hydroxy-TEMPO (15.56 g, 90.31 mmol, 2.26 equiv) in 3:1 ethanol/toluene mixture (100 mL) is added in portions over a 15 minute period. Stirring of the red-orange solution is continued for 45 minutes at room temperature with no visible sign of reaction (color change or heat evolution). The funnel is replaced with a reflux condenser, and dibutyl tin dilaurate (100 mL, 0.167 mmol, 0.0042 equiv) is added by syringe. Reaction then becomes evident by the evolution of moderate heat. Stirring is continued for six hours at room temperature.

Pentane (150 mL) is added to precipitate the product. Addition causes the separation of viscous orange oil. The supernatant is decanted and set aside, and the oil is washed with two 100 mL portions of ether to remove residual 4-hydroxy-TEMPO. Each portion is vigorously stirred for 10 min, followed by decantation. The decantates are combined with the original filtrate causing precipitation of a peach-colored solid that is collected on a filter and set aside. After the second ether wash is decanted, the oily mass is stirred overnight with 100 mL of pentane, resulting in titration and precipitation of beige solid. The solid is collected on a frit and washed with two 75 mL portions of ether. The ethereal extracts are retained. The washed solid is dried under vacuum to yield 16.2 g of a pale peach-colored powder. The ethereal extracts are treated with pentane to precipitate an additional 3 g of material, giving a total yield of 19.2 g (80%). Infrared spectroscopic analysis of the solid is conducted by evaporation of a solution to give a thin film. Analysis indicates complete disappearance of the -NCO band at 2274 cm-1, indicating complete consumption of the isocyanate residues in the sample. Infrared spectrographic analysis of the film shows 3295 (N-H), 2967 (C-H), 1715 (C=O), 1533 cm-1.

### Preparation of Stearyl Urethane TEMPO

Stearyl urethane TEMPO is prepared as 1:1 molar mixture of 4-hydroxy-TEMPO, stearyl isocyanate with approximately 0.1 % of dibutyltin dilaurate (DBTDL) as catalyst. The reactants are melted separately at 80C, and 0.1 % by weight of DBTDL is added to the 4-hyrdoxy-TEMPO, mixed on a vortex mixer, and reheated for about 1 minute. The two liquids are then poured together, mixed on a vortex mixer, and the reaction allowed to proceed to completion at 130C. An aliquot is used for the analysis, and spectra are collected on a Nicolet Magna 750 FT-IR spectrometer via transmission. The samples are prepared as capillary films pressed between salts. The salts are then placed in a heatable cell holder connected to a digital temperature controller. Resolution is set at 4cm⁻¹ and 64 scans are co-added to enhance the signal to noise (s/n) ratio. The spectra are processed with triangular apodization.

### Comparative Examples 2 and 3

The LDPE resin used in these examples has the same properties as the LDPE resin used in Examples 1-4 and Comparative Example 1. The same Brabender mixer was used to make 40-gram samples of the blends but in this instance, all ingredients except peroxide are added to and mixed in the bowl at 125C for 3 minutes, followed by addition and compounding of the peroxide for a further 4 minutes. The crosslinking kinetics of the blends is investigated using the MDR equipment and procedure of the previous examples at 140C and 182C.

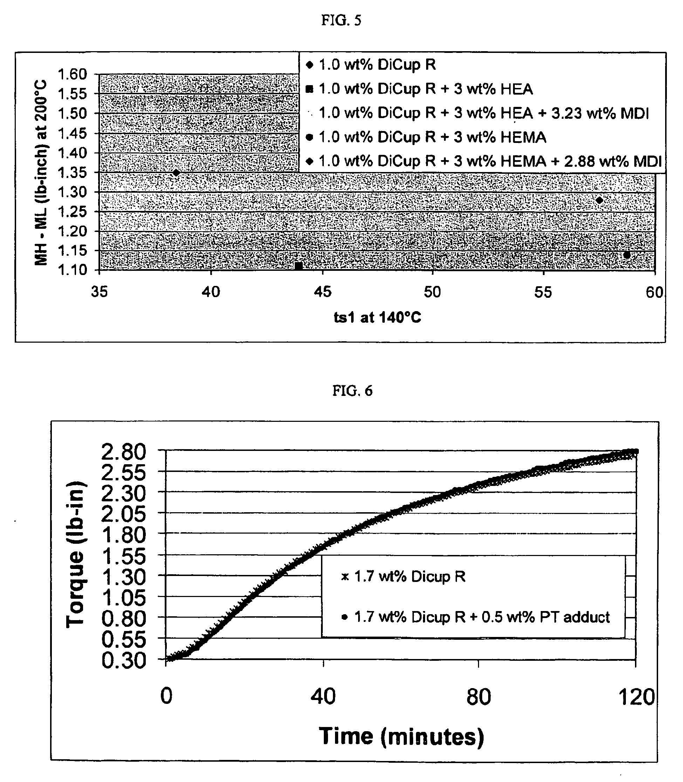

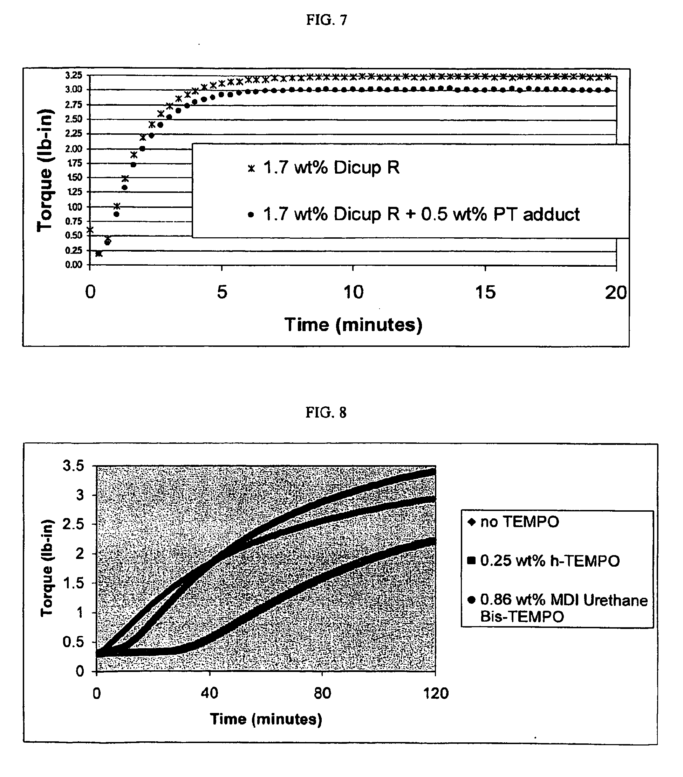

The results are reported in Figures 6 and 7. In both comparative examples, the LDPE composition comprises 1.7 wt% peroxide, but Comparative Example 3 additionally comprises 0.5 wt% of the PAPI-TEMPO adduct. As shown in Figure 6, the use of the adduct does not suppress scorch at 140C. As shown in Figure 7, the use of the adduct results in an inferior rate and degree of crosslinking at 182C.

### Comparative Examples 4-6

The samples are prepared and analyzed in the same manner as the samples of Comparative Examples 2 and 3, except that a nitrogen purge is used to clear air from the mixing bowl prior to compounding the samples. The crosslinking kinetics of the blends is investigated using the MDR equipment and procedure of the previous examples at 140C and 182C.

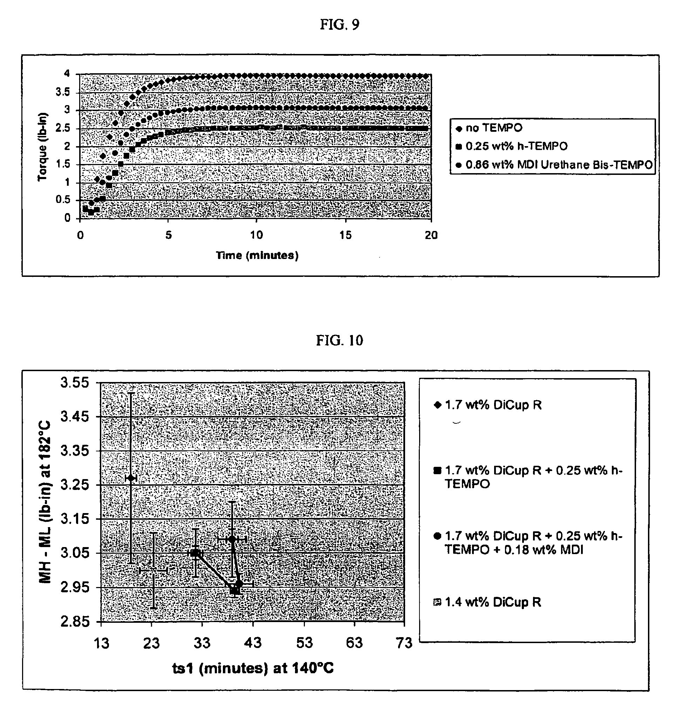

The results are reported in Figures 8 and 9. In all examples, the LDPE composition comprises 1.7 wt% peroxide. In the samples of Comparative Example 5, 4-hydroxy-TEMPO is present at 0.25 wt% of the composition. In the samples of Comparative Example 6, MDI urethane bis-TEMPO adduct is present at 0.86 wt% of the composition.

As shown in Figure 8, the use of 4-hydroxy TEMPO suppressed scorch at 140C but as shown in Figure 9, it also led to an inferior rate and degree of crosslinking at 182C. As shown in Figure 8, the use of the MDI urethane bis-TEMPO adduct did not suppress scorch significantly at 140C although as shown in Figure 9, it did lead to greater rate and degree of crosslinking at 182C (relative to the use of 4-hydroxy TEMPO).

### Comparative Examples 7-9 and Example 2

The peroxide-soaked LDPE polymer pellets and the 40-gram samples of the various crosslinkable polymer compositions are prepared in the same manner as those of Examples 1-4 and Comparative Example 1. The crosslinking kinetics of the samples is investigated in the same manner as the kinetics is investigated in Examples 1-4 and Comparative Example 1 at 140C and 182C.

The results are reported in Figure 10. In Comparative Examples 7 and 8 and Example 2, the LDPE composition comprises 1.7 wt% peroxide. In Comparative Example 9, the LDPE composition comprises 1.4 wt% peroxide. Comparative Example 8 and Example 5 also comprise 0.25 wt% 4-hydroxy-TEMPO, and Example 5 further comprises 0.18 wt% MDI. As shown in Figure 10, the combination of 4-hydroxy-TEMPO and MDI desirably increases scorch time (time for 1 in-lb increase in torque, tsₗ) at a temperature of 140C, and it also increases degree of crosslinking (Maximum Torque, MH - Minimum Torque, ML) at 182C, compared with 4-hydroxy-TEMPO alone.

### Comparative Example 10 and Example 6

The peroxide-soaked LDPE polymer pellets and the 40-gram samples of the various crosslinkable polymer compositions are prepared in the same manner as those of Examples 1-4 and Comparative Example 1, except that the entire contents of the jar are mixed in a Brabender mixing bowl at 125C and 30 rpm for 10 minutes after the overnight soaking step (instead of tumble blending again for 30 minutes at room temperature), prior to adding to the mixing bowl for blending with 4-hydroxy-TEMPO and/or MDI. The crosslinking kinetics of the samples is investigated in the same manner as the kinetics is investigated in Examples 1-4 and Comparative Example 1 at 140C and 182C.

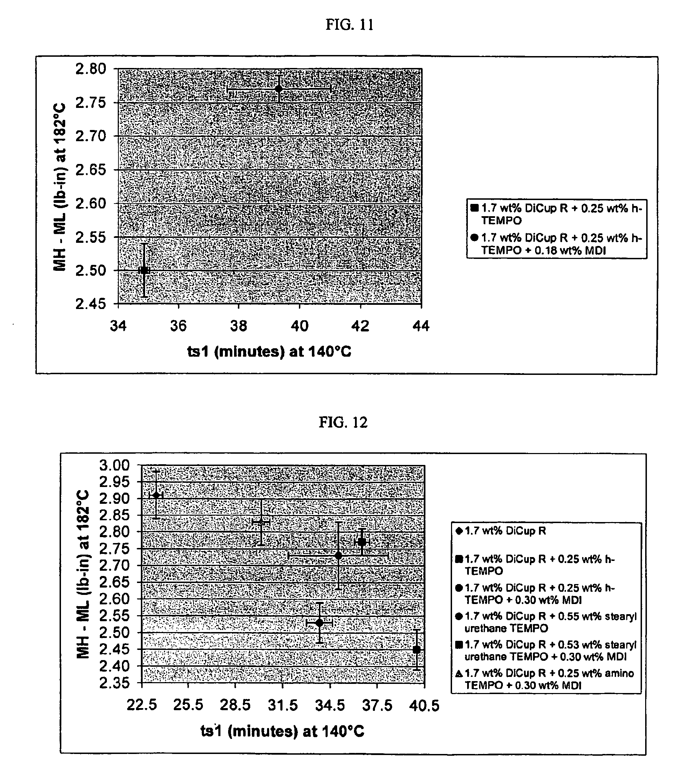

The results are reported in Figure 11. In Comparative Example 10, the LDPE composition comprises 1.7 wt% peroxide and 0.25 wt% 4-hydroxy-TEMPO. In Example 6, the composition comprises 1.7 wt% peroxide, 0.25 wt% 4-hydroxy-TEMPO and 0.18 wt% MDI. Figure 11 shows that the combination-of 4-hydroxy-TEMPO and MDI desirably increased scorch time at a temperature of 140C, and it also increases the degree of crosslinking (MH - ML) at 182C relative to 4- hydroxy-TEMPO alone.

### Comparative Examples 11-13 and Examples 7-9

The peroxide-soaked LDPE polymer pellets and the 40-gram samples of the various crosslinkable polymer compositions are prepared in the same manner as those of Example 6 and Comparative Example 10. The crosslinking kinetics of the samples is investigated in the same manner as the kinetics is investigated in Examples 1-4 and Comparative Example 1 at 140C and 182C.

The results are reported in Figure 12. In all examples, the LDPE composition comprises 1.7 wt% peroxide. The composition of Comparative Example 12 further comprises 0.25 wt% 4-hydroxy-TEMPO. The composition of Example 7 further comprises 0.25 wt% 4-hydroxy-TEMPO and 0.30 wt% MDI. The composition of Comparative Example 13 further comprises 0.55 wt% stearyl urethane TEMPO, and the composition of Example 8 further comprises 0,53 wt% stearyl urethane TEMPO and 0.30 wt% MDI. The composition of Example 9 further comprises 0.25 wt% amino TEMPO and 0.30 wt% MDI.

The combination of mono-TEMPO derivatives (i.e., amino-TEMPO. 4-hydroxy-TEMPO, stearyl urethane TEMPO) and MDI desirably improves the balance of scorch time at a temperature of 140C and the degree of crosslinking at 182C, compared with mono-TEMPO derivatives alone.

### Comparative Examples 14-17 and Example 10

The peroxide-soaked LDPE polymer pellets and the 40-gram samples of the various crosslinkable polymer compositions are prepared in the same manner as those of Example 6 and Comparative Example 10 except that the peroxide was omitted from the LDPE resin of Comparative Examples 15-17, and dibutyl tin dilaurate (DBTDL) was substituted for the peroxide in Comparative Examples 17. The crosslinking kinetics of the samples is Investigated in the same manner as the kinetics is investigated in Examples 1-4 and Comparative Example 1 at 140C and 182C.

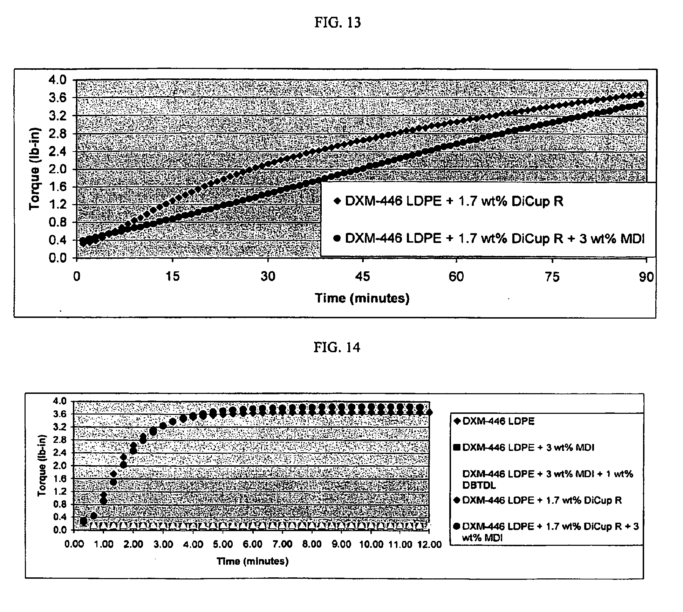

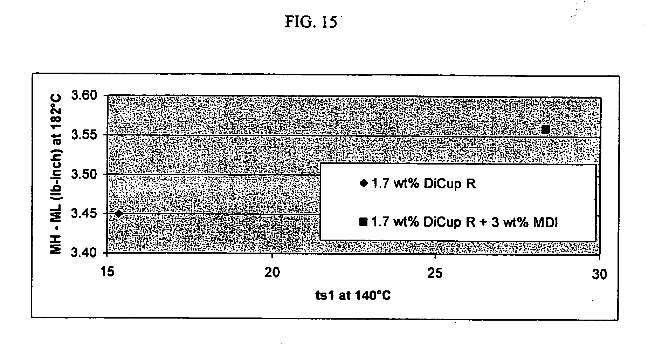

The results are reported in Figures 13-15. In Comparative Example 14, the LDPE composition comprises 1.7 wt% peroxide and is void of any scorch inhibitor. In Comparative Example 15 the LDPE is void of peroxide, DBTDL and any scorch inhibitor. In Comparative Example 16, the LDPE resin comprises 3 wt% MDI, and is void of peroxide and DBTDL. In Comparative Example 17, the LDPE resin comprises 3 wt% MDI and 1 wt% DBTDL and is void of peroxide. In Example 10, the LDPE resin comprises 1.7 wt% peroxide and 3 wt% MDL

As shown in the Figures, MDI In combination with peroxide desirably improves the balance of scorch time at a temperature of 140C and the degree of crosslinking at 182C. Without peroxide MDI does not crosslink the resin (even with DBTDL as a catalyst).

## Claims

1. A polymer composition comprising a (i) free radical initiator, (ii) free radical crosslinkable polymer, and (iii) scorch-inhibiting amount of at least one of an isocyanate, and a diisocyanate, each of formula (I) :
R(NCO)n (I)
in which n is at least 1, and R is an aliphatic, alicyclic, aliphatic-alicyclic, aromatic or aliphatic-aromatic hydrocarbon or an inertly-substituted hydrocarbon radical of 4 to 26 carbon atoms; in which the scorch Inhibitor further comprises at least one of 4-hydroxy-TEMPO, methyl ether TEMPO, butyl ether TEMPO, hexyl ether TEMPO, allyl ether TEMPO, and stearyl urethane TEMPO.

2. The polymer compositions of claim 1 in which the scorch inhibitor is present in an amount of at least 0.01 wt. % based on the weight of the polymers.

3. The polymer composition of claim 2 in which R is C₆₋₂₀ and n is 2-4.

4. The polymer composition of claim 2 in which the scorch inhibitor is at least one of MDI and a polymeric isocyanate.

5. The polymer composition of claim 2 in which the scorch inhibitor is a diisocyanate of formula (I) And is present with a (meth)acrylate scorch inhibitor of formula (II):
CH₂=C(R₁)-C(O)-O-R₂ (II)
in which R₁ is a hydrogen or methyl radical, and R₂ is a straight or branched chain hydrocarbon radical, or a hydroxyalkyl radical or an inertly-substituted hydrocarbon or hydroxyalkyl radical, hazing 1 to 10 carbon atoms, the scorch inhibitors of formulae (II) and (I) present in a (II); (I) molar ratio between 0.1 and 20.

6. A method of boosting the cure of a free radical crosslinkable polymer composition comprising a free radical initiator, the method comprising mixing with the composition prior to exposing the composition to free-radical crosslinking conditions a cure-boosting amount of diisocyanate cure booster, the diisocyanate cure booster being of formula (I) :
R(NCO)n (I)
in which n is at least 2, and R is an aliphatic, alicyclic, aliphatic-alicyclic, aromatic, or aliphatic-aromatic hydrocarbon or an inertly-substituted hydrocarbon radical of 4 to 26 carbon atoms.

7. The method of claim 6 in which the cure booster is present in an amount of at least 0.01 wt. % based on the weight of the polymer.

8. The method of claim 6 in which the polymer composition further comprises a scorch inhibitor.

9. The method of claim 8 in which the scorch inhibitor is at least one of 4-hydroxy-TEMPO, methyl ether TEMPO, butyl ether TEMPO, hexyl ether TEMPO, allyl ether TEMPO, and stearyl urethane TEMPO.

10. The article comprising the polymer composition of claim 1.

## Patentansprüche

1. Polymerzusammensetzung, die Folgendes umfasst: (i) einen radikalischen Initiator, (ii) ein radikalisch vernetzbares Polymer und (iii) eine scorchhemmende Menge von mindestens einem von einem Isocyanat und einem Diisocyanat, jeweils der Formel (I):
R(NCO)ₙ (I)
in der n mindestens 1 ist und R ein aliphatischer, alicyclischer, aliphatischalicyclischer, aromatischer oder aliphatisch-aromatischer Kohlenwasserstoff oder ein inert substituierter Kohlenwasserstoffrest mit 4 bis 26 Kohlenstoffatomen ist; in welcher der Scorch-Inhibitor ferner mindestens eines von 4-Hydroxy-TEMPO, Methylether-TEMPO, Butylether-TEMPO, Hexylether-TEMPO, Allylether-TEMPO und Stearylurethan-TEMPO umfasst.

2. Polymerzusammensetzung nach Anspruch 1, bei welcher der Scorch-Inhibitor in einer Menge von mindestens 0,01 Gew.-% bezogen auf das Gewicht des Polymers vorliegt.

3. Polymerzusammensetzung nach Anspruch 2, bei der R C₆₋₂₀ und n 2-4 ist.

4. Polymerzusammensetzung nach Anspruch 2, bei welcher der Scorch-Inhibitor mindestens eines von MDI und einem polymeren Isocyanat ist.

5. Polymerzusammensetzung nach Anspruch 2, bei welcher der Scorch-Inhibitor ein Diisocyanat der Formel (I) ist und mit einem (Meth)acrylat-Scorch-Inhibitor der Formel (II) vorliegt:
CH₂=C(R₁)-C(O)-O-R₂ (II)
in der R₁ ein Wasserstoff- oder Methylrest ist und R₂ ein gerad- oder verzweigtkettiger Kohlenwasserstoffrest oder ein Hydroxyalkylrest oder ein inert substituierter Kohlenwasserstoff- oder Hydroxyalkylrest mit 1 bis 10 Kohlenstoffatomen ist, wobei die Scorch-Inhibitoren der Formeln (II) und (I) in einem Molverhältnis von (II) : (I) zwischen 0,1 und 20 vorliegen.

6. Verfahren zum Beschleunigen des Härtens einer radikalisch vernetzbaren Polymerzusammensetzung, die einen radikalischen Initiator umfasst, wobei die Zusammensetzung bei dem Verfahren, bevor die Zusammensetzung Bedingungen einer radikalischen Vernetzung ausgesetzt wird, mit einer das Härten beschleunigenden Menge eines Diisocyanat-Härtungsbeschleunigers gemischt wird, wobei der Diisocyanat-Härtungsbeschleuniger die Formel (I) hat:
R(NCO)ₙ (I)
in der n mindestens 2 ist und R ein aliphatischer, alicyclischer, aliphatischalicyclischer, aromatischer oder aliphatisch-aromatischer Kohlenwasserstoff oder ein inert substituierter Kohlenwasserstoffrest mit 4 bis 26 Kohlenstoffatomen ist.

7. Verfahren nach Anspruch 6, bei dem der Härtungsbeschleuniger in einer Menge von mindestens 0,01 Gew.-% bezogen auf das Gewicht des Polymers vorliegt.

8. Verfahren nach Anspruch 6, bei dem die Polymerzusammensetzung ferner einen Scorch-Inhibitor umfasst.

9. Verfahren nach Anspruch 8, bei dem der Scorch-Inhibitor mindestens eines von 4-Hydroxy-TEMPO, Methylether-TEMPO, Butylether-TEMPO, Hexylether-TEMPO, Allylether-TEMPO und Stearylurethan-TEMPO ist.

10. Gegenstand, der die Polymerzusammensetzung nach Anspruch 1 umfasst.

## Revendications

1. Composition à base de polymère, comprenant :
i) un amorceur de radicaux libres,
ii) un polymère réticulable par voie radicalaire,
iii) et en une quantité à effet d'inhibition du grillage, au moins l'un d'un isocyanate et d'un diisocyanate, chacun de formule (I) :
R(NCO)ₙ (I)
dans laquelle l'indice n vaut au moins 1 et R représente un groupe hydrocarboné de type aliphatique, alicyclique, aliphatique-alicyclique, aromatique ou aliphatique-aromatique, ou hydrocarboné à substituant(s) inerte(s), comportant 4 à 26 atomes de carbone ;
dans laquelle l'inhibiteur de grillage comprend en outre au moins l'un des composés suivants : 4-hydroxy-TEMPO, méthoxy-TEMPO, butyl-oxy-TEMPO, hexyl-oxy-TEMPO, allyl-oxy-TEMPO, et stéaryl-carbamyl-TEMPO.

2. Composition de polymère conforme à la revendication 1, dans laquelle l'inhibiteur de grillage se trouve en une quantité représentant au moins 0,01 % du poids du polymère.

3. Composition de polymère conforme à la revendication 2, dans laquelle R représente un groupe en C₆₋₂₀ et n vaut de 2 à 4.

4. Composition de polymère conforme à la revendication 2, dans laquelle l'inhibiteur de grillage est au moins l'un du MDI et d'un isocyanate polyfonctionnel.

5. Composition de polymère conforme à la revendication 2, dans laquelle l'inhibiteur de grillage est un diisocyanate de formule (I) et se trouve associé à un inhibiteur de grillage de type acrylate ou méthacrylate, de formule (II) :
CH₂₌C(R₁)-C(O)-O-R₂ (II)
dans laquelle R₁ représente un atome d'hydrogène ou un groupe méthyle, et R₂ représente un groupe hydrocarboné à chaîne linéaire ou ramifiée, un groupe hydroxy-alkyle, ou un groupe hydrocarboné ou hydroxy-alkyle à substituant(s) inerte(s), comportant 1 à 10 atomes de carbone,
et les inhibiteurs de grillage de formules (I) et (II) se trouvent en un rapport molaire (II)/(I) valant de 0,1 à 20.

6. Procédé permettant d'accélérer le durcissement d'une composition de polymère réticulable par voie radicalaire, comprenant un amorceur de radicaux libres, lequel procédé comporte le fait de mélanger avec la composition, avant de mettre celle-ci dans des conditions de réticulation par voie radicalaire, un accélérateur de durcissement de type diisocyanate, en une quantité à effet d'accélération du durcissement, lequel accélérateur de durcissement de type diisocyanate est un composé de formule (I) :
R(NCO)ₙ (I)
dans laquelle l'indice n vaut au moins 2 et R représente un groupe hydrocarboné de type aliphatique, alicyclique, aliphatique-alicyclique, aromatique ou aliphatique-aromatique, ou hydrocarboné à substituant(s) inerte(s), comportant 4 à 26 atomes de carbone.

7. Procédé conforme à la revendication 6, dans lequel l'accélérateur de durcissement se trouve présent en une quantité représentant au moins 0,01 % du poids du polymère.

8. Procédé conforme à la revendication 6, dans lequel la composition de polymère comprend en outre un inhibiteur de grillage.

9. Procédé conforme à la revendication 8, dans lequel l'inhibiteur de grillage est au moins l'un des composés suivants : 4-hydroxy-TEMPO, méthoxy-TEMPO, butyl-oxy-TEMPO, hexyl-oxy-TEMPO, allyl-oxy-TEMPO, et stéaryl-carbamyl-TEMPO.

10. Article comprenant une composition de polymère conforme à la revendication 1.
